# EUROPÄISCHE PATENTSCHRIFT

(11) **EP 2 991 794 B1**
(45) Veröffentlichungstag und Bekanntmachung des Hinweises auf die Patenterteilung: **14.06.2017**
(21) Anmeldenummer: 14723986.7
(22) Anmeldetag: 16.04.2014
(51) Int. Cl.: B23K 1/005, B23K 1/19, B23K 26/06, B23K 26/08, B23K 26/32

(54) **VERFAHREN ZUM VERLÖTEN EINES LEICHTBLECHS UND EINES VOLLBLECHS MIT EINEM LASERSTRAHL**
METHOD FOR SOLDERING A SANDWICH METAL SHEET TO A SOLID METAL SHEET USING A LASER BEAM
PROCÉDÉ POUR ASSEMBLER UNE TÔLE LÉGÈRE ET UNE TÔLE PLEINE AU MOYEN D'UN FAISCEAU LASER

(30) Priorität: 03.05.2013 DE 102013104527; 15.07.2013 DE 102013107484
(43) Veröffentlichungstag der Anmeldung: 09.03.2016
(73) Patentinhaber: Volkswagen AG, 38440 Wolfsburg (DE)
(72) Erfinder: KILIAN, Arwed, 14974 Ludwigsfelde (DE); SCHIWY, Sören, 38106 Braunschweig (DE)
(74) Vertreter: Kaufmann, Sigfrid
(86) Internationale Anmeldenummer: PCT/DE2014/100133
(87) Internationale Veröffentlichungsnummer: WO 2014/190971

(56) Entgegenhaltungen:
- EP-A1- 2 174 743
- DE-A1-102011 009 066
- JP-A- 2005 238 249
- US-A1- 2011 020 666

## Beschreibung

Die Erfindung betrifft ein Verfahren zum stoffschlüssigen Verbinden eines Leichtblechs mit einem Vollblech.

In vielen Bereichen der Industrie, z. B. im Fahrzeugbau, werden großflächige Bleche verbaut, was mit einem entsprechend hohen Gewicht einhergeht. Anstelle von Blechen, die vollständig aus Metall bestehen (auch als "Vollblech" oder "Normalblech" bezeichnet), können sogenannte Leichtbleche eingesetzt werden.

Ein solches Leichtblech besteht aus einer Schichtanordnung mit einer ersten Blechschicht, einer zweiten Blechschicht, und einer zwischen der ersten und der zweiten Blechschicht angeordneten Kern- bzw. Zwischenschicht. Die Zwischenschicht weist eine Kunststoffschicht auf oder besteht aus einer Kunststoffschicht, wobei die Kunststoffschicht z. B. eine PU-Schicht sein kann (wobei PU für Polyurethan steht). Solche Leichtbleche (auch als Sandwichbleche bezeichnet) bestehen somit aus zwei Deckblechen und einer zwischen denselben angeordneten Kernschicht mit bzw. aus einer Kunststoffschicht. Indem das Leichtblech nicht vollständig aus Metall besteht, sondern eine Kunststoff-Zwischenschicht aufweist, kann es mit einem geringeren Gewicht als ein entsprechendes Vollblech gleicher Abmessungen ausgebildet sein.

Die erste und die zweite Blechschicht des Leichtblechs können z. B. aus einem verzinkten Blech mit einer Dicke von typischerweise 0,25 mm bis 0,3 mm ausgeführt sein. Typischerweise sind beim thermischen Fügen an der Leichtblechseite Höchsttemperaturen von ca. 230 °C kurzfristig möglich, wobei Temperaturen oberhalb der Höchsttemperatur zur Schädigung des Leichtblechs, insbesondere der Verbindung zwischen Blechschicht und Kunststoffschicht, führen.

Wie z. B. in DE 38 20 848 A1, DE 38 44 856 C2 und DE 10 2005 042 361 A1 gezeigt, können Werkstücke mittels Laserstrahlung thermisch gefügt werden.

Beim thermischen Fügen (z. B. mittels Lötens oder Schweißens) eines Leichtblechs mit einem Vollblech besteht die Gefahr der Beschädigung des Leichtblechs (z. B. durch Beschädigung einer äußeren Blechschicht oder der Verbindung zwischen Blechschicht und Kunststoffschicht oder der Zwischenschicht selbst) infolge der beim thermischen Fügen vorliegenden hohen Temperaturen. Zum Beispiel kann die an einer Lötstelle vorliegende Temperatur für ein Vollblech vollkommen unschädlich sein, an dem Leichtblech jedoch bereits eine Schädigung hervorrufen. So kann beim Löten unter Umständen bereits eine Erwärmung des Leichtblechs auf die zum Schmelzen des Lotes erforderliche Temperatur zu einer Schädigung des Leichtblechs (z. B. zur Schädigung der Zwischenschicht des Leichtblechs) führen, insbesondere da aufgrund der geringen Dicke der äußeren Blechschichten des Leichtblechs nur eine schlechte Wärmeabfuhr von der Fügestelle erfolgt.

DE 10 2008 060 506 A1 und DE 10 2011 009 066 A1 (die ein Verfahren gemäß dem Oberbegriff des Anspruchs 1 offenbart) beschreiben das thermische Fügen eines Leichtblechs mit einem Vollblech, wobei es gemäß der Druckschriften insbesondere wichtig ist, dass die Wärmeenergie in Richtung des Vollbleches abgeleitet wird. Dazu wird an der Lötstelle entweder das Vollblech in seiner Dicke zumindest verdoppelt oder ein zusätzliches Blech eingefügt. Nachteilig bei diesen Verfahren ist die Unverzichtbarkeit auf zusätzliches Material an der Lötstelle, welches außerdem eine Schädigung des Leichtblechs durch zu hohen Wärmeeintrag nicht zuverlässig verhindern kann.

Alternativ zum thermischen Fügen kann ein stoffschlüssiges Verbinden eines Leichtblechs mit einem Vollblech mittels Klebens erfolgen. Jedoch ist dies in der Regel mit prozesstechnischen Schwierigkeiten verbunden (lange Aushärtezeiten, präziser Kleberauftrag, zusätzliches Gewicht, Verschieben der Bauteile beim Handling). Als ein anderes Beispiel beschreibt die DE 10 2004 016 854 A1, Dünnbleche und Sandwichbleche mittels Klammerns mit Metallklammern miteinander zu verbinden.

Durch die Erfindung wird ein Fügeverfahren bereitgestellt, mittels dessen ein zuverlässiges und zerstörungsfreies Verbinden eines Leichtmetallblechs mit einem Vollblech auf einer vollautomatisierten Linie mit sehr kurzen Taktzeiten ermöglicht ist. Ein Verfahren zum Verlöten eines Leichtbleches mit einem Vollblech ist in Anspruch 1 definiert.

Gemäß der Erfindung werden zunächst zwei Fügepartner bereitgestellt, wobei der erste Fügepartner (bzw. das erste Werkstück) ein Leichtblech ist und der zweite Fügepartner (bzw. das zweite Werkstück) ein Vollblech ist. Das Leichtblech und das Vollblech werden mittels Strahllötens miteinander verbunden; d. h. der zum Aufheizen der Lötstelle erforderliche Energieeintrag erfolgt mittels eines energiereichen Strahls bzw. Energiestrahls (im Folgenden auch als "Aufheiz-Strahl" bezeichnet), wobei die energiereichen Strahlen z. B. in Form von elektromagnetischen Strahlen (z. B. Laserstrahl, Infrarotstrahlung), Teilchenstrahlen (z. B. Elektronenstrahl) oder gerichtetem Schall (z. B. Ultraschall) vorliegen können. Das Leichtblech und das Vollblech werden an einer Lötstelle miteinander verlötet, wobei eine Position des Leichtblechs mittels eines Lotmaterials stoffschlüssig mit einer Position des Vollblechs verbunden wird. Die Lötstelle weist somit eine leichtblechseitige Position und eine vollblechseitige Position auf. Unter der leichtblechseitigen Position der Lötstelle wird vorliegend der Bereich der Lötstelle verstanden, in dem (nach Aufbringen des Lotmaterials) das Lotmaterial das Leichtblech kontaktiert; analog wird unter der vollblechseitigen Position der Lötstelle derjenige Bereich der Lötstelle verstanden, in dem (nach Aufbringen des Lotmaterials) das Lotmaterial das Vollblech kontaktiert. Der zum Aufheizen der Lötstelle erforderliche Energieeintrag erfolgt mittels eines energiereichen Strahls, wobei mittels des Strahls ein Energieeintrag sowohl an der leichtblechseitigen Position als auch an der vollblechseitigen Position der Lötstelle erfolgt.

Gemäß der Erfindung wird der mittels des Aufheiz-Strahls erfolgende Energieeintrag derart räumlich variiert, dass an dem Leichtblech bzw. an der leichtblechseitigen Position der Lötstelle ein geringerer Energieeintrag erfolgt als an dem Vollblech bzw. an der vollblechseitigen Position der Lötstelle, wobei an der leichtblechseitigen Position z. B. ein gezielter, minimal notwendiger Energieeintrag erfolgt. Indem an der Leichtblechseite ein geringerer Energieeintrag erfolgt als an der Vollblechseite, kann eine Schädigung des Leichtblechs verhindert werden.

Der mittels des Energiestrahls erfolgende Energieeintrag geht mit einem Wärmeeintrag einher und führt somit zu einer Erwärmung bzw. Temperaturerhöhung des bestrahlten Bereichs, d. h. der Lötstelle.

Der mittels des Aufheiz-Strahls erfolgende Energieeintrag wird derart räumlich variiert, dass an dem Leichtblech ein geringerer Energieeintrag erfolgt als an dem Vollblech. Erfindungsgemäß ist vorgesehen, den Energieeintrag derart räumlich zu variieren, dass die infolge des Energieeintrags an der Leichtblechseite resultierende Temperatur geringer ist als die infolge des Energieeintrags an der Vollblechseite resultierende Temperatur. Zum Beispiel kann vorgesehen sein, den Energieeintrag derart räumlich zu variieren, dass die an der Leichtblechseite resultierende Temperatur unterhalb einer vorgegebenen Maximaltemperatur (z. B. die Schmelztemperatur eines Materials der Zwischenschicht des Leichtblechs) bleibt und z. B. kleiner ist als die Schmelztemperatur der Kunststoffschicht des Leichtblechs.

Insbesondere ist vorgesehen, den mittels des Aufheiz-Strahls erfolgenden Energieeintrag derart räumlich zu variieren, dass die an der Leichtblechseite resultierende Temperatur unterhalb der Schmelztemperatur des Lotmaterials liegt (oder maximal der Schmelztemperatur des Lotmaterials entspricht) und die an der Vollblechseite resultierende Temperatur mindestens der Schmelztemperatur des Lotmaterials entspricht oder darüber liegt. Demgemäß kann z. B. der zum Aufschmelzen des Lotmaterials erforderliche Wärmeeintrag von der Vollblechseite her erfolgen oder bereits geschmolzenes Lotmaterial auf eine derart vortemperierte Lötstelle aufgebracht werden.

Die räumliche Variation des durch den Aufheiz-Strahl erfolgenden Energieeintrags kann z. B. realisiert werden, indem ein Energiestrahl (z. B. ein Laserstrahl) mit einer entlang seines Strahlquerschnitts räumlich variierenden (und zeitlich konstanten) Intensitätsverteilung als Aufheiz-Strahl verwendet wird, wobei der Energiestrahl z. B. in einem auf das Leichtblech gerichteten Strahlabschnitt eine geringere Intensität und/oder Leistung aufweist als in einem auf das Vollblech gerichteten Strahlabschnitt (wobei die Leistung eines Strahlabschnitts der über diesen Strahlabschnitt bzw. dessen Querschnitt integrierten Intensität entspricht). Demgemäß wird die räumliche Variation des Energieeintrags durch räumliche Variation der auf die Fügestelle auftreffenden Lichtintensität bei gleicher Verweildauer erzielt.

Insbesondere kann der Strahl einen ersten Abschnitt bzw. Teilstrahl mit einer ersten Intensität/Leistung und einen zweiten Abschnitt bzw. Teilstrahl mit einer zweiten Intensität/Leistung aufweisen, wobei die erste Intensität/Leistung geringer ist als die zweite Intensität/Leistung, und wobei der Strahl derart geformt und geführt wird, dass er mit seinem ersten Abschnitt bzw. Teilstrahl auf die Leichtblechseite und mit seinem zweiten Abschnitt bzw. Teilstrahl auf die Vollblechseite der Lötstelle trifft. Dabei kann der Energiestrahl bevorzugt derart ausgebildet sein, dass er bzw. sein Querschnitt eine nicht rotationssymmetrische räumliche Intensitätsverteilung derart aufweist, dass sein auf dem Leichtblech auftreffender Abschnitt eine geringere Intensität/Leistung aufweist als sein auf dem Vollblech auftreffender Abschnitt.

Es kann insbesondere vorgesehen sein, den Energiestrahl mit zwei Teilstrahlen derart auszubilden, dass der auf den leichtblechseitigen Lötstellenbereich auftreffende erste Teilstrahl ein erstes Intensitätsmaximum und der auf den vollblechseitigen Lötstellenbereich auftreffende zweite Teilstrahl ein zweites Intensitätsmaximum aufweist (wobei die beiden Maxima zueinander beabstandet sind und lokale Intensitätsmaxima des Gesamtstrahls bilden), wobei die Leistung und das Intensitätsmaximum des ersten Teilstrahls geringer sind als die Leistung bzw. das Intensitätsmaximum des zweiten Teilstrahls. Ein Laserstrahl mit einer solchen Intensitätsverteilung kann z. B. mittels einer Bifokaloptik (z. B. einer Bifokaloptik mit strahlformenden und strahlteilenden festen Elementen) erzeugt werden. Zum Beispiel kann der Strahl aus zwei in einem Abstand zueinander parallel verlaufenden Teilstrahlen mit jeweils rotationssymmetrischem (z. B. gaussförmigem) Intensitätsprofil bestehen, wobei der (auf das Leichtblech gerichtete) erste Teilstrahl eine geringere Intensität und Leistung aufweist als der (auf das Vollblech gerichtete) zweite Teilstrahl.

Als ein anderes Beispiel kann vorgesehen sein, den Energiestrahl derart auszubilden und zu führen, dass er bzw. sein Strahlquerschnitt an der Lötstelle eine in Richtung von dem Vollblech zu dem Leichtblech monoton (z. B. streng monoton) abnehmende Intensität aufweist, sodass die in dem (auf den leichtblechseitigen Lötstellenbereich aufreffenden) ersten Strahlabschnitt vorliegende Intensität stets geringer ist als die in dem (auf den vollblechseitigen Lötstellenbereich auftreffenden) zweiten Strahlabschnitt vorliegende Intensität.

Bei der Verwendung eines Laserstrahls als Aufheiz-Strahl wird gemäß der Erfindung eine räumliche Variation der Intensität entlang des Strahlquerschnitts z. B. mittels der Verwendung von passiven bzw. unbewegbaren optischen Komponenten (z. B. diffraktiven optischen Elementen) realisiert, die zur Formung des räumlichen Intensitätsprofils des Laserstrahls ausgebildet sind.

Alternativ kann die räumliche Variation des durch den Aufheiz-Strahl erfolgenden Energieeintrags realisiert werden, indem ein (einziger) Strahl mit einer vorgegebenen (z. B. zeitlich konstanten) Intensität und Intensitätsverteilung derart bewegt geführt wird, dass die (kumulierte) Verweildauer des Strahls auf der Leichtblechseite geringer ist als die (kumulierte) Verweildauer des Strahls auf der Vollblechseite. Es kann z. B. vorgesehen sein, den energiereichen Strahl bzw. die Auftreffposition des Energiestrahls auf der Fügestelle zwischen der Leichtblechseite und der Vollblechseite der Lötstelle derart (oszillierend) hin- und herzupendeln, dass die kumulierte Verweildauer des Strahls (und somit der kumulierte Energieeintrag) auf der Leichtblechseite geringer ist als die kumulierte Verweildauer des Strahls (und somit der kumulierte Energieeintrag) auf der Vollblechseite.

Bei der Verwendung eines Laserstrahls als Aufheiz-Strahl wird gemaß der Erfindung eine derartige räumliche Variation des Energieeintrags z. B. unter Verwendung aktiver bzw. bewegbarer optischer Komponenten mittels Oszillation eines (fokussierten) Laserstrahls an der Fügestelle realisiert. Der Laserstrahl kann z. B. mittels einer dafür vorgesehenen Strahlablenkeinrichtung (z. B. mittels eines galvanometrisch oder piezoelektrisch angetriebenen Scannerspiegels) ausgelenkt bzw. bewegt werden.

Alternativ oder zusätzlich dazu kann die räumliche Variation des Energieeintrags erfolgen (oder unterstützt werden), indem der Energiestrahl bzw. die Auftreffposition des Energiestrahls auf der Fügestelle oszillierend zwischen der leichtblechseitigen und der vollblechseitigen Position der Lötstelle hin und her bewegt wird und der Energiestrahl mit einer zu der Oszillation der Energiestrahl-Auftreffposition synchronen Leistungsmodulation ausgebildet wird; wobei die Leistung bzw. Intensität des Energiestrahls derart zeitlich variiert wird, dass bei Positionierung der Energiestrahl-Auftreffposition an der leichtblechseitigen Position der Lötstelle der Energiestrahl eine niedrigere Leistung bzw. Intensität aufweist als bei Positionierung der Energiestrahl-Auftreffposition an der vollblechseitigen Position der Lötstelle. Insbesondere kann vorgesehen sein, eine derartige Leistungsmodulation unterstützend zusätzlich zu der oben erläuterten Verweildauer-Modulation anzuwenden, wobei an der leichtblechseitigen Position der Lötstelle sowohl eine geringere Verweildauer als auch eine geringere Strahlleistung/Strahlintensität vorliegen als an der vollblechseitigen Position der Lötstelle. Vorliegend bezeichnet die Intensität die Strahlenergie pro Zeit und pro Fläche. Für einen vorgegebenen Strahl mit zeitlich konstanter Intensität und vorgegebenem Strahlquerschnitt steigt somit der Energieeintrag proportional mit der Verweildauer. Die Leistung bezeichnet den Energieeintrag pro Zeit, wobei die Leistung eines Strahlabschnitts der über die Querschnittsfläche dieses Strahlabschnitts integrierten Intensität entspricht.

Mittels des Verfahrens können separate bzw. isoliert vorliegende Lötstellen hergestellt werden. Es kann jedoch auch vorgesehen sein, durch kontinuierlichen Vorschub der Lötstellenposition entlang eines vorgesehenen Lötnahtverlaufs eine durchgängige Lötnaht herzustellen.

Der Energieeintrag an der Lötstelle mittels des Aufheiz-Strahls kann vor und/oder während des Aufbringens des Lotmaterials erfolgen. Das Lotmaterial kann in geschmolzenem Zustand auf die mittels des Aufheiz-Strahls aufgeheizten Blechbereiche aufgebracht werden. Es kann jedoch auch vorgesehen sein, das Lotmaterial in festem Zustand in Kontakt mit den mittels des Aufheiz-Strahls aufgeheizten Blechbereichen zu bringen, wobei das Lotmaterial erst mittels des durch den Aufheiz-Strahl erfolgenden Energieeintrags geschmolzen wird. Hierbei kann das Lotmaterial über eine Widerstandserwärmung (technisch als Heißdrahtapplikation bezeichnet) vortemperiert werden. Dieses kann so eingestellt werden, dass der Übergang des Lotmaterials von der festen zur schmelzflüssigen Phase nur einen minimalen Energieeintrag benötigt.

Gemäß einer Ausführungsform wird eine Lötverbindung erzeugt, indem zunächst das Leichtblech und das Vollblech mittels eines wie oben erläutert räumlich variierten Energieeintrags vorgeheizt werden und nachfolgend (z. B. geschmolzenes) Lotmaterial auf die derart vorgeheizte Lötstelle aufgebracht wird. Demgemäß wird die Lötstelle vor Aufbringen des Lotmaterials mittels des Energieeintrags mit dem Energiestrahl vortemperiert und danach Lotmaterial (bevorzugt geschmolzenes Lotmaterial) auf die derart vortemperierte Lötstelle aufgebracht.

Es kann also vorgesehen sein, das Lotmaterial in schmelzflüssiger Form auf die Lötstelle aufzubringen, wobei das Lotmaterial im geschmolzenen Zustand an der Lötstelle auf das Leichtblech und/oder das Vollblech aufgetragen wird. Insbesondere kann vorgesehen sein, das Lotmaterial tropfenförmig aufzubringen, wobei das Lotmaterial z. B. im schmelzflüssigen Zustand in einem aus einzelnen Tropfen bestehenden Materialstrom auf die Lötstelle aufgebracht wird.

Zum Beispiel kann vorgesehen sein, eine Lötnaht zwischen dem Leichtblech und dem Vollblech zu erzeugen, indem das Leichtblech und das Vollblech zunächst entlang des vorgesehenen Lötnahtverlaufs mittels eines wie oben erläutert räumlich variierten Energieeintrags vorgeheizt werden und dem derart vorgeheizten Lötnahtverlauf ein Lotdraht nachgeführt wird, wobei mittels eines zum Abschmelzen von Lotmaterial von dem Lotdraht vorgesehenen Lasers bzw. Laserstrahls oder anderweitigen energiereichen Strahls (im Folgenden auch "als Abschmelz-Strahl" bezeichnet) Lotmaterial von dem Lotdraht abgeschmolzen wird und das abgeschmolzene Lotmaterial auf den mittels des Aufheiz-Strahls vorgeheizten Lötnahtverlauf aufgebracht wird. Das Abschmelzen des Lotmaterials kann z. B. mittels eines gepulsten Lasers erfolgen, wobei das Lotmaterial sozusagen stückweise mittels des gepulsten Lasers abgeschmolzen wird. Hierbei kann durch eine Widerstandserwärmung des Lotwerkstoffs der zum Abschmelzen benötigte Energieeintrag minimiert werden.

Der Abschmelz-Strahl kann durch räumliche Variation sowohl zum Abschmelzen des Lotwerkstoffs genutzt werden als auch zur Nachbehandlung (d. h. Erwärmen mittels Energieeintrags durch den Energiestrahl) der erzeugten Lötnaht in der noch schmelzflüssigen Phase vor der Erstarrungsfront. Es entsteht dadurch eine ausgezeichnete Nahtqualität. Ebenfalls vorteilhaft ist die Abdeckung des Schmelzbadbereiches mit einem geeigneten Schutzgas.

Gemäß der Erfindung ist vorgesehen, das Leichtblech und/oder das Vollblech vor dem Verlöten an der Position der vorgesehenen Lötstelle mit einer Strukturierung bzw. Mikrostrukturierung (d. h. mit einer Strukturierung aus Strukturelementen mit Abmessungen im Bereich von unter 1000 µm) zu versehen. Eine solche Mikrostrukturierung kann z. B. erzeugt werden, indem ein gepulster Laserstrahl oder anderweitiger energiereicher Strahl (im Folgenden auch als "Strukturierungs-Strahl" bezeichnet) über das Leichtblech bzw. das Vollblech geführt wird, wobei mittels eines jeden Strahlpulses ein lokales Aufschmelzen der Blechoberfläche unter Ausbildung eines Schmelzkraters erfolgt, sodass die Mikrostrukturierung von den Schmelzkratern gebildet wird. Demgemäß werden vor dem Aufbringen des Lotmaterials das Leichtblech und/oder das Vollblech an der Lötstelle mittels lokalen Aufschmelzens mit einer Oberflächenstrukturierung derart versehen, dass die Oberflächenrauigkeit des Leichtblechs und des Vollblechs im Bereich der Lötstelle erhöht wird (wodurch die Anbindungs- bzw. Kontaktierungsfläche zwischen dem Lotmaterial und dem jeweiligen Blech vergrößert wird).

Indem das Leichtblech und/oder das Vollblech an der Lötstellenposition mit der Mikrostrukturierung versehen werden, kann die Oberflächenspannung bzw. Grenzflächenspannung des geschmolzenen Lotmaterials an den Blechen gesenkt werden, sodass die Lötverbindung mit einem geringen Kontaktwinkel zwischen dem jeweiligen Blech und dem Lotmaterial ausgeführt werden kann und die Lötnaht entsprechend flach gehalten werden kann. Dadurch kann z. B. ein Nachbearbeiten der Lötstellen entfallen oder der Aufwand hierfür minimiert werden.

Der Aufheiz-Strahl, der Abschmelz-Strahl und der Strukturierungs-Strahl können jeweils unterschiedliche energiereiche Strahlen sein, z. B. mittels separater Strahlerzeugungsvorrichtungen (z. B. Laser) erzeugte Strahlen. Es kann jedoch auch vorgesehen sein, dass mindestens zwei oder alle dieser Strahlen durch ein und denselben Strahl gegeben sind, wobei dieser Strahl zeitlich nacheinander die Funktionen des Aufheiz-Strahls, des Abschmelz-Strahls und/oder des Strukturierungs-Strahls übernimmt und somit z. B. in einem ersten Zeitabschnitt bzw. Verfahrens-Teilschritt als Aufheiz-Strahl fungiert, in einem zweiten Zeitabschnitt bzw. Verfahrens-Teilschritt als Abschmelz-Strahl fungiert und/oder in einem dritten Zeitabschnitt bzw. Verfahrens-Teilschritt als Strukturierungs-Strahl fungiert.

Die Erfindung wird nachfolgend anhand von Ausführungsbeispielen mit Bezug auf die Figuren veranschaulicht, wobei gleiche oder ähnliche Merkmale mit gleichen Bezugszeichen versehen sind; hierbei zeigen schematisch:
- Figur 1: eine Lötverbindung zwischen einem Leichtblech und einem Vollblech;
- Figur 2: das Erzeugen einer Lötverbindung mittels eines Energiestrahls mit einer entlang seines Strahlquerschnitts variierenden Intensität;
- Figur 3: ein Intensitätsverteilungsdiagramm zur Erläuterung von Figur 2;
- Figur 4: das Erzeugen einer Lötverbindung mit einem oszillierenden Energiestrahl.

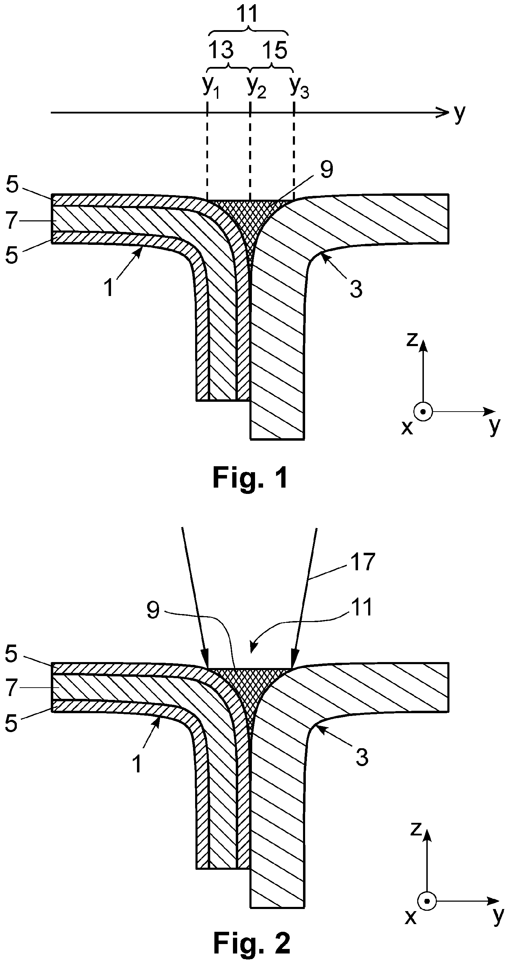

Figur 1 veranschaulicht die Geometrie einer Lötverbindung zwischen einem Leichtblech 1 und einem Vollblech 3 in einem Querschnitt. Das Leichtblech 1 weist zwei Deckbleche 5 und eine in einer Sandwichgeometrie zwischen denselben angeordnete Kernschicht in Form einer Kunststoffschicht 7 auf. Als Beispiel besteht jedes der Deckbleche 5 aus einem verzinkten Stahlblech, die Kernschicht 7 besteht aus einem Polymermaterial. Das Vollblech 3 ist ein verzinktes Stahlblech. Das Leichtblech 1 und das Vollblech 3 sind in Form eines Bördelstoßes angeordnet.

Mittels eines Lotmaterials 9 werden das Leichtblech 1 und das Vollblech 3 unter Ausbildung einer stoffschlüssigen Verbindung an einer Lötstelle 11 miteinander verbunden. Als Beispiel wird durch kontinuierlichen Vorschub der Lötstellenposition 11 entlang der x-Richtung des in den Figuren dargestellten xyz-Koordinatensystems eine entlang der x-Richtung verlaufende Lötnaht erzeugt.

Wie aus Figur 1 ersichtlich, wird das Lotmaterial 9 in einem leichtblechseitigen Bereich 13 der Lötstelle 11 kontaktierend mit dem Leichtblech 1 und in einem vollblechseitigen Bereich 15 der Lötstelle 11 kontaktierend mit dem Vollblech 3 verbunden, sodass die Lötstelle 11 eine leichtblechseitige Position 13 und eine vollblechseitige Position 15 aufweist, wobei die leichtblechseitige Position 13 der Lötstelle 11 mittels des Lotmaterials 9 mit der vollblechseitigen Position 15 der Lötstelle 11 verbunden wird. Die leichtblechseitige Position 13 der Lötstelle 11 erstreckt sich (quer zur Längsrichtung der Lötnaht) von einer Quer-Koordinate y₁ bis zu einer Quer-Koordinate y₂, wohingegen sich die vollblechseitige Position 15 der Lötstelle 11 von der Quer-Koordinate y₂ bis zu einer Quer-Koordinate y₃ erstreckt (dies gilt analog für die übrigen Figuren).

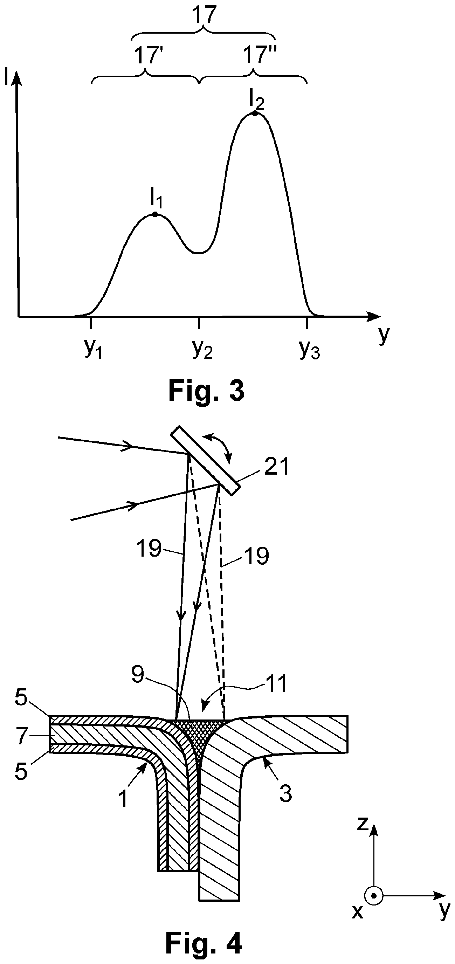

Figur 2 veranschaulicht das Ausbilden einer Lötnaht unter Durchführung eines Verfahrens gemäß einer Ausführungsform, wobei an einer jeweiligen Lötstelle 11 ein Energieeintrag mittels eines Energiestrahls in Form eines Laserstrahls 17 erfolgt. Der Laserstrahl 17 weist eine entlang seines Strahlquerschnitts räumlich variierende Intensität auf, wobei der Laserstrahl 17 in Figur 2 durch die denselben bezüglich der y-Richtung begrenzenden Randstrahlen veranschaulicht ist. Die Intensitätsverteilung des Laserstrahls 17 an der Lötstelle 11 (d. h. beim Auftreffen auf die Lötstelle) bezüglich der Querrichtung (y-Richtung) ist in Figur 3 veranschaulicht.

Gemäß Figur 3 ist die Intensitätsverteilung des Laserstrahls 17 nicht rotationssymmetrisch. Der Laserstrahl 17 weist zwei Teilstrahlen 17', 17" auf, wobei der erste Teilstrahl 17' ein Intensitätsmaximum I₁ und der zweite Teilstrahl 17" ein Intensitätsmaximum I₂ aufweist, wobei die beiden Intensitätsmaxima lokale Intensitätsmaxima des Laserstrahls 17 bilden und entlang der quer zur Längsrichtung der Lötnaht verlaufenden Querrichtung (d. h. entlang der y-Richtung) voneinander beabstandet sind. Das Intensitätsmaximum I₁ und die Lichtleistung des ersten Teilstrahls 17' sind kleiner als das Intensitätsmaximum I₂ und die Lichtleistung des zweiten Teilstrahls 17". Ein solcher Laserstrahl 17 mit zwei lokalen Intensitätsmaxima kann z. B. mittels einer Bifokaloptik oder mittels optischen Zusammenführens zweier separater Laserstrahlen zu einem einzigen Gesamtstrahl erzeugt werden.

Der Laserstrahl 17 wird derart geformt und auf die Lötstelle 11 gerichtet, dass der leistungsärmere erste Teilstrahl 17' mit dem Intensitätsmaximum I₁ auf der leichtblechseitigen Position 13 der Lötstelle 11 und der leistungsstärkere zweite Teilstrahl 17" mit dem Intensitätsmaximum I₂ auf der vollblechseitigen Position 15 der Lötstelle 11 auftreffen. Somit ergibt sich auf der leichtblechseitigen Position 13 der Lötstelle 11 ein geringerer Energieeintrag als auf der vollblechseitigen Position 15 der Lötstelle 11.

Gemäß den Figuren 2 und 3 weist der Laserstrahl 17 eine entlang seines Strahlquerschnitts derart variierende Intensität auf, dass der Laserstrahl 17 zwei lokale Intensitätsmaxima aufweist. Alternativ kann vorgesehen sein, den Laserstrahl 17 ohne lokale Intensitätsmaxima auszubilden, sondern den Laserstrahl 17 stattdessen derart auszubilden und zu führen, dass er an der Lötstelle 11 eine in Richtung von der leichtblechseitigen Position 13 zu der vollblechseitigen Position 15 hin, d. h. von der Quer-Koordinate y₁ zu der Quer-Koordinate y₃ hin, monoton (z. B. streng monoton) zunehmende Intensität aufweist.

Gemäß den Figuren 2 und 3 wird somit der an der Lötstelle 11 mittels des Laserstrahls 17 erfolgende Energieeintrag derart räumlich variiert, dass an der leichtblechseitigen Lötstellenposition 13 ein geringerer Energieeintrag erfolgt als an der vollblechseitigen Lötstellenposition 15, indem der Laserstrahl 17 eine entlang seines Strahlquerschnitts räumlich variierende Intensität aufweist.

Figur 4 veranschaulicht das Ausbilden einer Lötverbindung unter Durchführung eines Verfahrens gemäß einer weiteren Ausführungsform, wobei ein oszillierender, fokussierter Energiestrahl in Form eines Laserstrahls 19 verwendet wird. Der Laserstrahl 19 wird mittels einer Ablenkeinrichtung 21 in Form eines angetrieben schwenkbaren Spiegels 21 derart entlang der y-Richtung zwischen der leichtblechseitigen Position 13 und der vollblechseitigen Position 15 der Lötstelle 11 oszillierend hin und her bewegt, dass die kumulierte Verweildauer der Auftreffposition des Laserstrahls 19 an der leichtblechseitigen Position 13 der Lötstelle 11 kleiner ist als an der vollblechseitigen Position 15 der Lötstelle 11. Der Fokus des Laserstrahls 19 oszilliert mittels Schwenkens des Spiegels 21 zwischen dem Leichtblech 1 (durchgezogener Laserstrahlverlauf 19) und dem Vollblech 3 (durchbrochener Laserstrahlverlauf 19), wobei der Laserstrahl 19 im Vergleich zu der mit Bezug auf die Figuren 2 und 3 erläuterten Ausführungsform wesentlich stärker fokussiert ist (d. h. eine kleinere Fokusgröße aufweist). Es ist vorgesehen, die Leistung des Laserstrahls 19 synchron zu dessen Oszillationsbewegung derart zeitlich zu variieren, dass der Laserstrahl 19 eine geringere Leistung aufweist, wenn die Auftreffposition (bzw. der Fokus) des Laserstrahls 19 an der leichtblechseitigen Position 13 der Lötstelle 11 positioniert ist, und der Laserstrahl 19 eine demgegenüber höhere Leistung aufweist, wenn die Auftreffposition (bzw. der Fokus) des Laserstrahls 19 an der vollblechseitigen Position 15 der Lötstelle 11 positioniert ist.

Indem der Laserstrahl 19 bei Auftreffen an der leichtblechseitigen Lötstellenposition 13 eine geringere Verweildauer (und optional eine geringere Leistung) aufweist als bei Auftreffen an der vollblechseitigen Lötstellenposition 15, wird der mittels des Laserstrahls 19 erfolgende Energieeintrag derart räumlich variiert, dass an der leichtblechseitigen Lötstellenposition 13 ein geringerer Energieeintrag erfolgt als an der vollblechseitigen Lötstellenposition 15.

Gemäß den mit Bezug auf die Figuren 2 und 3 bzw. 4 beschriebenen Ausführungsformen wird der mittels des Laserstrahls 17 bzw. 19 erfolgende Energieeintrag somit derart räumlich variiert, dass an der leichtblechseitigen Lötstellenposition 13 bzw. dem leichtblechseitigen Lötstellenbereich 13 ein geringerer Energieeintrag erfolgt als an der vollblechseitigen Lötstellenposition 15 bzw. dem vollblechseitigen Lötstellenbereich 15.

Dabei wird der Energieeintrag zudem derart eingestellt, dass die durch den Energieeintrag in dem leichtblechseitigen Bereich 13 der Lötstelle 11 resultierende Temperatur geringer ist als die durch den Energieeintrag in dem vollblechseitigen Bereich 15 der Lötstelle 11 resultierende Temperatur. Zudem wird als Beispiel der Energieeintrag derart eingestellt, dass die in dem leichtblechseitigen Lötstellenbereich 13 resultierende Temperatur geringer ist als die Schmelztemperatur des Lotmaterials 9 und die in dem vollblechseitigen Lötstellenbereich 15 resultierende Temperatur größer ist als die Schmelztemperatur des Lotmaterials 9; wobei zusätzlich insbesondere vorgesehen sein kann, den Energieeintrag derart einzustellen, dass die in dem leichtblechseitigen Bereich 13 resultierende Temperatur kleiner ist als die Schmelztemperatur des Materials der Kernschicht 7.

Bei Durchführung dieser Lötverfahren werden in einem ersten Schritt das Leichtblech 1 und/oder das Vollblech 3 mittels des Laserstrahls 17 bzw. 19 im Bereich der Lötstelle 11 mit einer Oberflächenstrukturierung versehen, indem das Leichtblech 1 und das Vollblech 3 mittels des Laserstrahls 17 bzw. 19 über den Bereich der Lötstelle 11 hinweg an mehreren Stellen unter Ausbildung von Schmelzkratern lokal aufgeschmolzen werden, sodass von den Schmelzkratern eine Oberflächenstrukturierung gebildet wird.

In einem zweiten Schritt wird die derart oberflächenstrukturierte Lötstelle 11 mittels des oben beschriebenen Energieeintrags temperiert, wobei mittels der vorstehend erläuterten Energieeintrags-Verfahren an der leichtblechseitigen Lötstellenposition 13 ein geringerer Energieeintrag erfolgt als an der vollblechseitigen Lötstellenposition 15.

In einem dritten Schritt wird das Lotmaterial 9 unter Ausbildung einer Lötverbindung in geschmolzenem Zustand auf die derart temperierte Lötstelle 11 aufgebracht, indem mittels des Laserstrahls 17 bzw. 19 jeweils eine vorgegebene Lotmaterial-Menge von einem mittels einer Widerstandserwärmung vorgeheizten, festen Lotmaterial-Draht abgeschmolzen und auf die vorgeheizte Lötstelle 11 aufgebracht wird. In den Figuren 1, 2 und 4 ist die Lötstelle 11 mit dem aufgebrachten Lotmaterial 9 dargestellt.

In einem vierten Schritt wird die derart erzeugte Lötverbindung mittels des Laserstrahls 17 bzw. 19 nachbehandelt, indem der Laserstrahl im Bereich der noch schmelzflüssigen Phase des Lotmaterials vor der Erstarrungsfront über die Lötverbindung geführt wird und die Lötverbindung somit in diesem Bereich einem nochmaligen Energieeintrag ausgesetzt wird.

### Liste der verwendeten Bezugszeichen

- 1: Leichtblech
- 3: Vollblech
- 5: Deckblech
- 7: Zwischenschicht / Kunststoffschicht
- 9: Lotmaterial
- 11: Lötstelle
- 13: leichtblechseitige Position der Lötstelle
- 15: vollblechseitige Position der Lötstelle
- 17: Energiestrahl / Laserstrahl mit zwei lokalen Intensitätsmaxima
- 17': erster Teilstrahl
- 17": zweiter Teilstrahl
- 19: oszillierender Energiestrahl / Laserstrahl
- 21: Ablenkeinrichtung / schwenkbarer Spiegel
- I: Intensität des Laserstrahls
- I₁: Intensitätsmaximum eines ersten Teilstrahls des Laserstrahls
- I₂: Intensitätsmaximum eines zweiten Teilstrahls des Laserstrahls

## Patentansprüche

1. Verfahren zum Verlöten eines Leichtbleches (1), das zwei Deckbleche (5) mit einer zwischen denselben angeordneten Kunststoffschicht (7) aufweist, mit einem Vollblech (3), wobei mittels eines Energiestrahls (17, 19) ein Energieeintrag an einer Lötstelle (11) durchgeführt wird und eine leichtblechseitige Position (13) der Lötstelle (11) mittels eines Lotmaterials (9) stoffschlüssig mit einer vollblechseitigen Position (15) der Lötstelle (11) verbunden wird, **dadurch gekennzeichnet, dass**
- eine räumliche Variation des Energieeintrags mittels einer räumlichen Oszillation des Energiestrahls (17, 19) oder mittels einer entlang des Strahlquerschnitts des Energiestrahls (17, 19) räumlich variierenden Intensitätsverteilung durchgeführt wird;
- der Energieeintrag derart räumlich variiert wird, dass an der leichtblechseitigen Position (13) der Lötstelle (11) ein geringerer Energieeintrag erfolgt als an der vollblechseitigen Position (15) der Lötstelle (11) und die durch den Energieeintrag an der leichtblechseitigen Position (13) der Lötstelle (11) resultierende Temperatur kleiner ist als die Schmelztemperatur des Lotmaterials (9) und die durch den Energieeintrag an der vollblechseitigen Position (15) der Lötstelle (11) resultierende Temperatur mindestens so groß ist wie die Schmelztemperatur des Lotmaterials (9); und
- vor dem Aufbringen des Lotmaterials (9) das Leichtblech (1) an der leichtblechseitigen Position (13) der Lötstelle (11) und/oder das Vollblech (3) an der vollblechseitigen Position (15) der Lötstelle (11) mit einer Strukturierung versehen wird.

2. Verfahren nach Anspruch 1, **dadurch gekennzeichnet, dass** der mittels des Energiestrahls (19) erfolgende Energieeintrag räumlich variiert wird, indem der Energiestrahl derart zwischen der leichtblechseitigen Position (13) der Lötstelle (11) und der vollblechseitigen Position (15) der Lötstelle (11) oszillierend hin und her bewegt wird, dass die kumulierte Verweildauer des Energiestrahls (19) an der leichtblechseitigen Position (13) der Lötstelle geringer ist als die kumulierte Verweildauer des Energiestrahls (19) an der vollblechseitigen Position (15) der Lötstelle.

3. Verfahren nach Anspruch 1 oder 2, **dadurch gekennzeichnet, dass** der mittels des Energiestrahls (19) erfolgende Energieeintrag räumlich variiert wird, indem der Energiestrahl zwischen der leichtblechseitigen (13) und der vollblechseitigen (15) Position der Lötstelle (11) oszillierend hin und her bewegt wird und mit einer zu der Oszillationsbewegung synchronen Leistungsmodulation ausgebildet wird, wobei die Leistung des Energiestrahls (19) derart zeitlich variiert wird, dass der Energiestrahl bei Positionierung an der leichtblechseitigen Position (13) der Lötstelle eine kleinere Leistung aufweist als bei Positionierung an der vollblechseitigen Position (15) der Lötstelle.

4. Verfahren nach Anspruch 1, **dadurch gekennzeichnet, dass** der mittels des Energiestrahls (17) erfolgende Energieeintrag räumlich variiert wird, indem der Energiestrahl ein Energiestrahl (17) mit einer entlang seines Strahlquerschnitts räumlich variierenden Intensität ist, wobei der Energiestrahl einen auf die leichtblechseitige Position (13) der Lötstelle (11) gerichteten ersten Teilstrahl (17') und einen auf die vollblechseitige Position (15) der Lötstelle (11) gerichteten zweiten Teilstrahl (17") aufweist, und wobei der erste Teilstrahl eine geringere Leistung aufweist als der zweite Teilstrahl.

5. Verfahren nach Anspruch 4, **dadurch gekennzeichnet, dass** der Energiestrahl (17) derart ausgebildet wird, dass sein Querschnitt eine nicht rotationssymmetrische räumliche Intensitätsverteilung aufweist.

6. Verfahren nach Anspruch 4 oder 5, **dadurch gekennzeichnet, dass** der Energiestrahl (17) derart ausgebildet wird, dass der erste Teilstrahl (17') ein erstes Intensitätsmaximum (I₁) und der zweite Teilstrahl (17") ein zweites Intensitätsmaximum (I₂) aufweist, wobei das erste und das zweite Intensitätsmaximum voneinander beabstandete lokale Intensitätsmaxima des Energiestrahls (17) bilden, und wobei das erste Intensitätsmaximum kleiner ist als das zweite Intensitätsmaximum.

7. Verfahren nach einem der Ansprüche 1 bis 6, **dadurch gekennzeichnet, dass** die Lötstelle (11) vor Aufbringen des Lotmaterials (9) mittels des Energieeintrags mit dem Energiestrahl (17, 19) vortemperiert wird und danach das Lotmaterial (9) auf die vortemperierte Lötstelle (11) aufgebracht wird.

8. Verfahren nach einem der Ansprüche 1 bis 7, **dadurch gekennzeichnet, dass** das Lotmaterial (9) in schmelzflüssiger Form, insbesondere tropfenförmig, auf das Leichtblech (1) und/oder das Vollblech (3) an der Lötstelle (11) aufgetragen wird.

## Claims

1. A method for soldering a sandwich metal sheet, which has two cover metal sheets (5) with a plastic layer (2) arranged therebetween, to a solid metal sheet (3), wherein, by way of an energy beam (17, 19), energy is input at a soldering point (11) and, using a solder material (9), a position (13) of the soldering point (11) on the sandwich metal sheet side is integrally bonded to a position (15) of the soldering point (11) on the solid metal sheet side, **characterised in that**
- a spatial variation of the energy input is performed by means of a spatial oscillation of the energy beam (17, 19) or by means of a spatially varying intensity distribution along the beam cross-section of the energy beam (17, 19);
- the energy input is spatially varied in such a way that there is a smaller energy input at the position (13) of the soldering point (11) on the sandwich metal sheet side than at the position (15) of the soldering point (11) on the solid metal sheet side, and the temperature resulting from the energy input at the position (13) of the soldering point (11) on the sandwich metal sheet side is lower than the melting point of the solder material (9), and the temperature resulting from the energy input at the position (15) of the soldering point (11) on the solid metal sheet side is at least the same as the melting point of the solder material (9); and
- prior to the application of the solder material (9), the sandwich sheet metal (1) is provided with a structuring at the position (13) of the soldering point on the sandwich sheet metal side and/or the solid metal sheet (3) is provided with a structuring at the position (15) of the soldering point (11) on the solid metal sheet side.

2. The method according to claim 1, **characterised in that** the energy input occurring by way of the energy beam (19) is spatially varied **in that** the energy beam is moved to and fro in an oscillating manner between the position (13) of the soldering point (11) on the sandwich metal sheet side and the position (15) of the soldering point (11) on the solid metal sheet side, **in that** the cumulative residence time of the energy beam (19) at the position (13) of the soldering point on the sandwich metal sheet side is shorter than the cumulative residence time of the energy beam (19) at the position (15) of the soldering point on the solid metal sheet side.

3. The method according to claim 1 or 2, **characterised in that** the energy input occurring by way of the energy beam (19) is spatially varied **in that** the energy beam between the position of the soldering point (11) on the sandwich metal sheet side (13) and the solid metal sheet side (15) is moved to and fro in an oscillating manner and is formed with a power modulation synchronous to the oscillation movement, wherein the power of the energy beam (19) is varied over time in such a way that the energy beam has a smaller power when positioned at the position (13) of the soldering point on the sandwich metal sheet side than when positioned at the position (15) of the soldering point on the solid metal sheet side.

4. The method according to claim 1, **characterised in that** the energy input occurring by way of the energy beam (17) is spatially varied **in that** the energy beam is an energy beam (17) with a spatially varying intensity along its beam cross-section, wherein the energy beam has a first sub-beam (17') directed towards the position (13) of the soldering point (11) on the sandwich metal sheet side and has a second sub-beam (17") directed towards the position (15) of the soldering point (11) on the solid metal sheet side, and wherein the first sub-beam has a smaller power than the second sub-beam.

5. The method according to claim 4, **characterised in that** the energy beam (17) is formed in such a way that its cross-section has a non-rotationally symmetrical spatial intensity distribution.

6. The method according to claim 4 or 5, **characterised in that** the energy beam (17) is formed in such a way that the first sub-beam (17') has a first intensity maximum (11) and the second sub-beam (17") has a second intensity maximum (I2), wherein the first and the second intensity maximum form local intensity maxima of the energy beam (17) distanced from one another, and wherein the first intensity maximum is smaller than the second intensity maximum.

7. The method according to any one of claims 1 to 6, **characterised in that** the temperature of the soldering point (11), prior to application of the solder material (9), is controlled in a preliminary manner by way of the energy input with the energy beam (17, 19), and the solder material (9) is then applied to the soldering point (11) of which the temperature has been controlled in a preliminary manner.

8. The method according to any one of claims 1 to 7, **characterised in that** the solder material (9) is applied in molten form, in particular in drop form, to the sandwich sheet metal (1) and/or the solid sheet metal (3) at the soldering point (11).

## Revendications

1. Procédé de soudage d'une tôle légère (1), qui présente deux tôles de recouvrement (5) avec une couche de matière synthétique (7) disposée entre celles-ci, avec une tôle pleine (3), où, au moyen d'un faisceau d'énergie (17, 19), un apport d'énergie est mis en oeuvre au niveau d'une région de soudage (11) et un emplacement (13) de la région de soudage (11) du côté de la tôle légère est relié par complémentarité des matières avec un emplacement (15) de la région de soudage (11) du côté de la tôle pleine au moyen d'un matériau de soudage (9), **caractérisé en ce**
- **qu'**une variation spatiale de l'apport d'énergie au moyen d'une oscillation spatiale du faisceau d'énergie (17, 19) ou au moyen d'une distribution d'intensité variable dans l'espace le long de la section transversale de faisceau du faisceau d'énergie (17, 19) est réalisée ;
- **que** l'apport d'énergie est varié dans l'espace de telle manière qu'un apport d'énergie plus faible a lieu au niveau de l'emplacement (13) de la région de soudage (11) du côté de la tôle légère qu'au niveau de l'emplacement (15) de la région de soudage (11) du côté de la tôle pleine et la température résultant de l'apport d'énergie au niveau de la région de soudage (11) du côté de la tôle légère est inférieure à la température de fusion du matériau de soudage (9) et la température résultant de l'apport d'énergie au niveau de l'emplacement (15) de la région de soudage (11) du côté de la tôle pleine (11) est au moins aussi élevée que la température de fusion du matériau de soudage (9) ; et
- **qu'**avant l'apport du matériau de soudage (9), la tôle légère (1) est munie d'une structuration au niveau de l'emplacement (13) de la région de soudage (11) du côté de la tôle légère et/ou la tôle pleine (3) est munie d'une structuration au niveau de l'emplacement (15) de la région de soudage (11) du côté de la tôle pleine.

2. Procédé selon la revendication 1, **caractérisé en ce que** l'apport d'énergie provoqué au moyen du faisceau d'énergie (19) est variable dans l'espace, par le fait que le faisceau d'énergie est déplacé de manière oscillante vers l'avant et l'arrière entre l'emplacement (13) de la région de soudage (11) du côté de la tôle légère et l'emplacement (15) de la région de soudage (11) du côté de la tôle pleine de telle manière que la durée de séjour cumulée du faisceau d'énergie (19) au niveau de l'emplacement (13) de la région de soudage du côté de la tôle légère est inférieure à la durée de séjour cumulée du faisceau d'énergie (19) au niveau de l'emplacement (15) de la région de soudage du côté de la tôle pleine.

3. Procédé selon la revendication 1 ou 2, **caractérisé en ce que** l'apport d'énergie réalisé au moyen du faisceau d'énergie (19) est variable dans l'espace, par le fait que le faisceau d'énergie est déplacé de manière oscillante vers l'avant et l'arrière entre l'emplacement (13) de la région de soudage (11) du côté de la tôle légère et l'emplacement (15) de la région de soudage (11) du côté de la tôle pleine et est conçu avec une modulation de puissance synchrone avec le mouvement d'oscillation, où la puissance du faisceau d'énergie (19) est variable dans le temps de telle manière que le faisceau d'énergie présente une puissance inférieure lors du positionnement au niveau de l'emplacement (13) de la région de soudage du côté de la tôle légère que lors du positionnement au niveau de l'emplacement (15) de la région de soudage du côté de la tôle pleine.

4. Procédé selon la revendication 1, **caractérisé en ce que** l'apport d'énergie réalisé au moyen du faisceau d'énergie (17) est variable dans l'espace, par le fait que le faisceau d'énergie est un faisceau d'énergie (17) avec une intensité variable dans l'espace le long de sa section transversale de faisceau, où le faisceau d'énergie présente un premier faisceau partiel (17') orienté vers l'emplacement (13) de la région de soudage (11) du côté de la tôle légère et un second faisceau partiel (17") orienté vers l'emplacement (15) de la région de soudage (11) du côté de la tôle pleine, et où le premier faisceau partiel présente une puissance inférieure à celle du second faisceau partiel.

5. Procédé selon la revendication 4, **caractérisé en ce que** le faisceau d'énergie (17) est conçu de telle manière que sa section transversale présente une distribution d'intensité dans l'espace non symétrique en rotation.

6. Procédé selon la revendication 4 ou 5, **caractérisé en ce que** le faisceau d'énergie (17) est conçu de telle manière que le premier faisceau partiel (17') présente un premier maximum d'intensité (11) et que le second faisceau partiel (17") présente un second maximum d'intensité (12), où les premier et second maxima d'intensité forment des maxima d'intensité locaux espacés les uns des autres du faisceau d'énergie (17), et où le premier maximum d'intensité est inférieur au second maximum d'intensité.

7. Procédé selon l'une des revendications 1 à 6, **caractérisé en ce que** la région de soudage (11) est préalablement mise à température avant l'apport du matériau de soudage (9) au moyen de l'apport d'énergie avec le faisceau d'énergie (17, 19) et ensuite le matériau de soudage (9) est rapporté sur la région de soudage (11) préalablement mise à température.

8. Procédé selon l'une des revendications 1 à 7, **caractérisé en ce que** le matériau de soudage (9) est rapporté sous la forme du liquide de fusion, notamment sous forme de gouttes, sur la tôle légère (1) et/ou la tôle pleine (3) au niveau de la région de soudage (11).
